# FASCICULE DE BREVET EUROPEEN

(11) **EP 3 313 793 B1**
(45) Date de publication et mention de la délivrance du brevet: **06.05.2020**
(21) Numéro de dépôt: 16741097.6
(22) Date de dépôt: 23.06.2016
(51) Int. Cl.: C03B 35/16, C03B 23/03

(54) **DISPOSITIF DE CONVOYAGE DE FEUILLES DE VERRE ET PROCÉDÉ ASSOCIÉ**
VORRICHTUNG ZUR FÖRDERUNG VON GLASSCHEIBEN UND DAZU GEHÖRENDEM VERFAHREN
DEVICE FOR CONVEYING GLASS SHEETS AND ASSOCIATED PROCESS

(30) Priorité: 25.06.2015 FR 1555849
(43) Date de publication de la demande: 02.05.2018
(73) Titulaire: Saint-Gobain Glass France, 92400 Courbevoie (FR)
(72) Inventeur: DECHIROT, David, 59155 Faches-Tumesnil (FR); GOBIN, Jérôme, 60170 Saint Leger aux Bois (FR); BURGAUD, David, 60310 Candor (FR)
(74) Mandataire: Saint-Gobain Recherche
(86) Numéro de dépôt international: PCT/FR2016/051549
(87) Numéro de publication internationale: WO 2016/207560

(56) Documents cités:
- EP-A1- 0 133 114
- US-A- 4 632 688
- US-A- 4 838 920
- US-A- 5 927 469
- US-A1- 2014 271 058

## Description

L'invention concerne le domaine du convoyage de feuilles de verre et de la détection de la position et de l'orientation des feuilles de verre convoyées, notamment dans le cadre d'un procédé de bombage industriel.

Au cours d'un processus industriel de traitement de feuilles de verre convoyées horizontalement les unes derrières les autres, il peut être utile de déterminer le moment de l'arrivée d'une feuille de verre à un endroit précis ainsi que son orientation en vue de dessus. Cette détection peut être mise à profit pour déclencher un mécanisme intervenant sur la feuille ainsi que pour corriger l'orientation des feuilles, notamment en début de convoyage. Notamment, dans le cadre d'un procédé de bombage thermique de feuilles de verre les unes après les autres, il est nécessaire de positionner exactement chaque feuille de verre en regard de l'outil de bombage et avec la bonne orientation.

Le US2003154745 enseigne un procédé de bombage d'une feuille de verre comprenant le chauffage de la feuille de verre jusqu'à une température de ramollissement, le transport de la feuille de verre suivant un trajet sensiblement horizontal jusqu'à une station de bombage entre deux formes, la mise en forme de la feuille de verre par pressage entre les deux formes, le refroidissement de la feuille de verre dans une station adaptée, ces moyens comportant des rouleaux en forme recevant la feuille de verre après bombage et lesdits rouleaux étant orientés parallèlement à la direction définie sur la feuille de verre par sa direction d'amenée dans la station de bombage.

Le US5286271 enseigne un procédé de bombage thermique de feuilles de verre transférées dans un poste de façonnage contenant une forme de bombage supérieur à aspiration présentant une surface de formage dirigée vers le bas. La feuille de verre est soulevée au contact de la surface de formage et maintenue contre celle-ci par aspiration. Le moule et la feuille de verre sont ensuite déplacés dans un poste de transfert et l'aspiration est supprimée pour déposer la feuille de verre bombée sur une surface de transport profilée.

Dans les procédés du type de ceux qui viennent d'être cités, il est pratiquement impossible de déterminer visuellement si le verre effectue un positionnement correct sous la forme de bombage et les problèmes de mauvais formage final sont souvent mal interprétés. Comme exemple de mauvaise interprétation, le positionnement des feuilles en entrée de four peut être corrigé dans un sens erroné qui amplifie le mauvais positionnement réel du verre sous l'outillage. D'autre part, un mauvais formage constaté peut être imputé à tort à un mauvais positionnement sous la forme de bombage. Dans ce cas, l'opérateur procédant à une modification de ce positionnement peut avoir tendance à amplifier l'instabilité du procédé. De plus, un contrôle permanent durant toute la production est impossible, l'opérateur étant également occupé à d'autres tâches. La détection et la correction rapide des dérives de positionnement sous la forme de bombage est donc impossible selon l'art antérieur. Les dérives fréquentes ou mauvais réglages, par manque de contrôle fin, fiable et permanent, se traduisent rapidement par des augmentations de taux de rebuts et de casses de verre.

Le US2014/0271058 enseigne un dispositif de convoyage de feuilles de verre sur un lit de rouleau faisant usage de capteurs optiques pour déterminer la position de deux bords du verre. Ces capteurs donnent des renseignements sur l'orientation de la feuille sur le lit de rouleau, et cette orientation est corrigée par un ensemble de rouleaux orientables venant ensuite sur le chemin de la feuille.

Le US4838920 enseigne une série de systèmes disposés les uns derrière les autres sur le chemin d'une feuille convoyée sur un lit de rouleaux pour lui donner une bonne position et orientation et arrêtant le lit de rouleau quand la feuille est sous une forme supérieure de bombage.

On a maintenant mis au point un dispositif de détection de la position d'une feuille de verre convoyée par un moyen de convoyage comprenant une butée pour venir en contact avec la tranche de la feuille de verre, ledit dispositif délivrant un signal électrique lorsque la feuille de verre est en contact avec ladite butée. C'est la tranche de la feuille de verre qui entre en contact physique avec la butée au cours du convoyage de la feuille. L'usage d'une seule butée établit l'arrivée d'une feuille à un endroit précis. Le signal électrique délivré par le dispositif peut ainsi servir à déclencher la suite du procédé devant s'appliquer à la feuille, comme par exemple un procédé de bombage pouvant comprendre la prise en charge de la feuille de verre en bonne position par un outil de bombage. Généralement, le contact de la feuille de verre avec la butée correspond à une position d'arrêt de la feuille au cours de son convoyage, notamment sur un lit de rouleaux. Le moyen de convoyage des feuilles individuellement les unes derrière les autres est généralement un lit de rouleaux mais peut aussi être un coussin d'air, un tapis, un chenillard (deux chenilles parallèles portant et entraînant les feuilles), un convoyeur à courroies, ou autre.

On considère que les feuilles circulent sous l'action du moyen de convoyage sur une surface dite « surface de convoyage ». Cette surface est généralement plane. Cette surface peut être constituée par les points les plus hauts d'un lit de rouleaux de convoyage. Si ces rouleaux sont rectilignes, parallèles et alignés dans un même plan, alors la surface de convoyage est plane.

Les rouleaux peuvent cependant être non-linéaire et donc courbés dans une direction transversale, c'est-à-dire perpendiculaire à la direction de convoyage (elle-même dite direction longitudinale) de sorte notamment à prébomber par gravité les feuilles dans la direction transversale sous l'effet de leur propre poids sur les rouleaux. La surface de convoyage sur laquelle circulent les feuilles n'est alors plus plane mais courbée en direction transversale. Le WO2014053776 enseigne une structure de rouleaux courbés de ce type, à usage de convoyage de feuilles de verre.

Les feuilles circulent sur la surface de convoyage et arrivent au contact de butées en un emplacement appelé par la suite « surface de réception ». Cette surface de réception est celle sur laquelle chaque feuille est arrêtée et doit être correctement positionnée et orientée vue de dessus, en vue de son traitement ultérieur, notamment un bombage.

L'usage d'une seule butée renseigne sur la présence de la feuille en contact avec la butée mais ne renseigne pas sur l'orientation de la feuille dans la surface de convoyage au moment de son contact avec la butée. Or la feuille est généralement polygonale et sa bonne orientation dans le plan de convoyage revêt généralement une grande importance. A titre d'exemple, on comprend bien en effet qu'une feuille de forme rectangulaire à bomber contre une forme de bombage cylindrique ne doit pas arriver sous la forme de bombage avec n'importe quelle orientation. L'usage de deux butées selon l'invention permet de déterminer l'orientation de la feuille de verre au moment de son contact avec la première butée, par déduction à partir de la durée écoulée entre les deux contacts. Cette information permet de rétablir la bonne orientation de la feuille au chargement des feuilles en début de convoyage, pour la bonne poursuite du procédé. En effet, les butées ont une position optimale pour la suite du traitement des feuilles, notamment un bombage, de sorte qu'une durée nulle entre les contacts d'une feuille avec les butées correspond à la meilleure situation. Par ailleurs, la feuille étant entraînée par le dispositif de convoyage jusqu'au contact avec les deux butées, son orientation est aussi automatiquement corrigée par l'action physique des butées sur la feuille. Ainsi, le dispositif de détection comprend deux butées pour venir toute deux en contact avec la tranche de la feuille de verre, ledit dispositif délivrant un signal électrique relativement à chaque contact avec chaque butée. Chaque butée génère un signal électrique indépendant au moment de son contact avec la feuille, les signaux électriques étant couplés à un système d'acquisition permettant d'établir la durée entre les contacts de la feuille de verre avec chaque butée. En effet, les deux butées ont la position optimale pour les feuilles de verre. Lorsque la feuille touche une butée, le moyen de convoyage continue à pousser la feuille jusqu'à ce que celle-ci touche la deuxième butée. La feuille est donc tournée en conséquence de ces deux contacts non-simultanés et l'orientation de la feuille est ainsi corrigée pour adopter la position optimale imposée par les deux butées. L'acquisition des signaux électriques délivrés par le dispositif permet de détecter quelle butée a été touchée en premier par la feuille et le temps nécessaire à la feuille pour toucher la deuxième butée. Grâce à cette donnée, on peut ainsi corriger le positionnement des feuilles suivantes sur le moyen de convoyage pour que celles-ci touchent les deux butées en même temps ou tout du moins avec le moins de délai possible entre les deux contacts. Il est en effet préférable que les feuilles arrivent avec la position la plus proche possible de la position optimale aux butées pour que le moyen de convoyage ait le moins d'action à produire sur la feuille pour lui faire toucher la deuxième butée. Cela permet d'accélérer le procédé s'appliquant aux feuilles, et de plus, cela permet généralement de réduire le risque de marquage de la face inférieure de la feuille. En effet, l'action du moyen de convoyage, notamment un lit de rouleaux, sur la feuille alors que celle-ci est déjà en butée contre l'une des butées peut produire des marques à sa surface, surtout si la feuille est à sa température de bombage thermique. Grâce à la connaissance de l'écart de positionnement de la feuille par rapport à la position optimale souhaitée, on peut corriger l'orientation des feuilles quand on les pose sur le moyen de convoyage, de sorte que la durée entre les contacts avec les deux butées soit le plus petit possible. De plus, si la feuille arrive aux butées avec une orientation optimale (contact simultané de la feuille avec les deux butées) ou proche d'une orientation optimale, la suite du procédé devant s'appliquer à la feuille peut intervenir immédiatement. Tout le procédé de fabrication s'en trouve donc accéléré.

Les deux butées constituent généralement une limite au déplacement des feuilles dans la direction de convoyage dite direction longitudinale, ce qui signifie que chaque feuille marque un arrêt au contact des deux butées. Ce sont les butées qui arrêtent la feuille. L'action conjuguée des deux butées corrige par ailleurs l'orientation de la feuille et la met en position optimale pour la suite du procédé.

L'invention concerne un dispositif et un procédé tels que figurant dans les revendications.

L'invention concerne un dispositif de convoyage et de détection de l'orientation de feuilles de verres défilant les unes derrière les autres comprenant un moyen de convoyage des feuilles de verre en direction longitudinale et un dispositif de détection de l'orientation d'une feuille de verre comprenant deux butées pour venir toutes deux en contact avec la tranche de la feuille de verre, la feuille étant entraînée par le moyen de convoyage jusqu'au contact avec les deux butées afin que son orientation soit automatiquement corrigée par l'action physique des butées sur la feuille, ledit dispositif de détection délivrant un signal électrique relativement à chaque contact avec chaque butée, les signaux électriques relatifs à chaque butée étant couplés à un système d'acquisition permettant d'établir la durée entre les contacts de la feuille de verre avec chaque butée. Notamment, le moyen de convoyage, est un lit de rouleaux, convoyant les feuilles de verre en direction longitudinale. Notamment, les butées peuvent constituer une limite au déplacement longitudinal de la feuille de verre en l'arrêtant. Le dispositif de détection selon l'invention s'occupe de déterminer la position et l'orientation d'une seule feuille de verre à la fois. Les feuilles défilant individuellement les unes derrières les autres sont destinées à subir le même traitement les unes après les autres, notamment un traitement de bombage et le dispositif de détection renseigne sur la présence et l'orientation de chaque feuille l'une après l'autre en vue de ce traitement ultérieur.

Plusieurs informations sont exploitables à l'aide des signaux électriques délivrés par deux butées selon l'invention:
- ordre de contacts successifs sur les différentes butées;
- temps de contact avec chaque butée;
- temps et calcul du décalage entre plusieurs butées;
- dérive de temps de contact ou d'ordre de contact dans le temps.

De préférence, dès que les deux butées sont au contact d'une feuille de verre, le moyen de convoyage en contact avec les feuilles, notamment un lit de rouleau, s'arrête afin de marquer le verre le moins possible. On peut asservir l'arrêt des rouleaux à la détection du contact avec les deux butées. Cependant, l'inertie mécanique du dispositif de convoyage est généralement trop forte pour qu'un tel asservissement soit efficace et suffisamment rapide. On ne peut en effet généralement pas se permettre d'attendre la détection du contact avec les butées pour déclencher l'arrêt du dispositif de convoyage, car cela pourrait occasionner un marquage de la face inférieure des feuilles avec les rouleaux. On a trouvé qu'il était préférable de prévoir un fonctionnement du moyen de convoyage indépendant du signal délivré par les butées. L'action du moyen de convoyage est avantageusement asservie à la détection de l'arrivée d'une feuille de verre par un « détecteur d'arrivée de feuille » distinct du dispositif de butées selon l'invention et placé en amont des butées, notamment un télémètre optique. Le détecteur d'arrivée de feuille, déclenche le ralentissement du moyen de convoyage avant le contact d'une feuille avec une des butées. Pour le cas où la feuille doit être positionnée à la verticale d'outils de bombage, le « détecteur d'arrivée de feuille » est de préférence placé en amont des outils de bombage. Le terme « amont » fait référence à une position précoce par rapport au processus suivi par une feuille de verre, notamment sur son trajet en direction longitudinale vers les butées. Le procédé suit alors le processus suivant à l'arrivée d'une feuille:
a) détection de l'arrivée d'une feuille par le détecteur d'arrivée de feuille, ladite détection déclenchant
b) le ralentissement du moyen de convoyage avant le contact de la « feuille à presser » avec l'une des butées, puis l'arrêt du moyen de convoyage de sorte à être sûr que le contact de la feuille avec les butées soit établi, puis
c) après l'arrêt du moyen de convoyage et donc de la feuille en contact avec les butées, l'escamotage des butées, puis
d) la poursuite du traitement de la feuille arrêtée en position optimale sur le moyen de convoyage à l'arrêt.

La « feuille à presser » est la feuille en position optimale pour être pressée contre la forme supérieure de bombage par un moyen de pressage.

Il n'est pas nécessaire d'asservir une de ces étapes a) à d) aux signaux électriques délivrés par le dispositif selon l'invention. Cependant, on pourrait subordonner l'escamotage d'une butée à la détection du signal électrique qui lui est relatif, à condition d'être sûr que la butée ne soit escamotée qu'après l'arrêt du moyen de convoyage. On pourrait aussi subordonner l'étape d) à la détection du signal électrique relatif aux butées. L'étape b) doit être optimisée par l'expérience. On doit régler le dispositif pour que le moyen de convoyage s'arrête à coup sûr après le contact de la feuille avec la ou les butées, ce qui est mis au point par des essais de routine. Les butées servent alors à arrêter la feuille en bonne position sur l'axe longitudinal de convoyage et à lui donner l'orientation optimale en vue de son traitement ultérieur selon l'étape d). Le dispositif selon l'invention sert aussi à analyser les éventuelles dérives d'orientation des feuilles vue de dessus dans la surface de convoyage, laquelle est généralement plane et horizontale.

Après l'arrêt du moyen de convoyage et donc également après l'arrêt de la feuille en contact avec les butées, celles-ci sont de préférence escamotée afin que le mouvement ultérieur prévu pour la feuille ne s'accompagne pas d'un frottement de la feuille contre au moins une butée. Dans ce cas, toute butée est escamotée après le début du contact avec la tranche de la feuille de verre et avant le bombage par pressage de façon à éviter un frottement de butée contre la feuille lorsque celle-ci est relevée. Par exemple, une butée peut être évacuée par un mouvement comprenant une composante en direction longitudinale et le cas échéant, en combinaison avec une composante verticale, notamment vers le haut. Selon ce mode de réalisation, une butée est évacuée en biais vers le haut en s'éloignant de la feuille, c'est-à-dire en un mouvement combinant une composante verticale vers le haut et horizontale en direction longitudinale. Le déplacement d'une butée peut être occasionné par l'intermédiaire d'un vérin pneumatique.

Après escamotage des butées et le traitement (notamment de bombage) de la feuille venue à leur contact, ladite feuille poursuivant son chemin dans la suite du procédé, les butées reprennent leur position initiale pour venir au contact d'une feuille suivante.

Les butées peuvent être reliées notamment à la forme supérieure de bombage ou à un cadre de pressage ou à un élément de structure du dispositif de convoyage ou de bombage.

Après l'arrêt du moyen de convoyage et donc également l'arrêt de la feuille en position optimale, toute butée du dispositif ayant le cas échéant été escamotée, la feuille est prête à subir le traitement prévu, lequel peut être un bombage thermique (c'est-à-dire « à chaud » à une température de déformation plastique, par opposition à un bombage à froid) généralement effectué entre 550 et 750°C.

Un bombage thermique est réalisé de façon irréversible à une feuille de verre grâce au fait qu'il est exercé à une température de déformation plastique suivi d'un refroidissement en-dessous de sa température de déformation plastique. Le bombage thermique peut être exercé par pressage de la feuille à presser contre la forme supérieure de bombage par un moyen de pressage. Ce moyen de pressage exerce une pression sur la face inférieure de la feuille de verre et au moins à la périphérie de celle-ci. Le moyen de pressage agit avec une force pneumatique ou une force mécanique pour plaquer et bomber la feuille contre la forme supérieure de bombage.

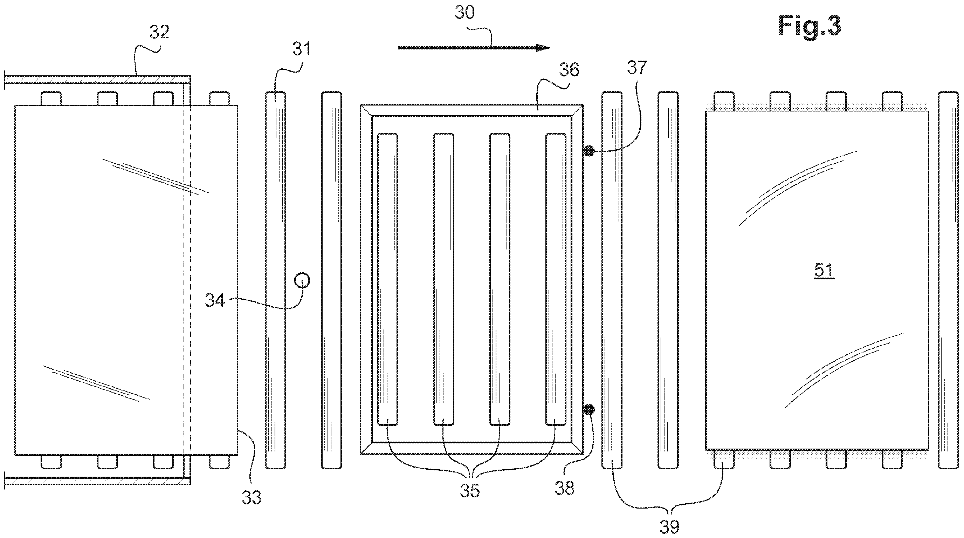

Le moyen de pressage de la feuille contre la forme supérieure peut être de nature pneumatique, comme un soufflage venant du dessous et soufflant, notamment entre des rouleaux de convoyage sur la face inférieure de la feuille, ou comme une aspiration par le dessus de la feuille. Une aspiration de la face supérieure de la feuille peut être exercée au travers d'orifices ménagés dans la face de bombage de la forme supérieure de bombage. Une aspiration peut également être exercée par une jupe entourant la forme supérieure de bombage. Le WO2011/144865 montre en sa figure 3 une forme supérieure de bombage munie à la fois d'orifices dans sa face de bombage pour aspirer la face supérieure de la feuille et d'une jupe 39 entourant la forme supérieure de bombage pour provoquer un flux d'air vers le haut venant lécher le bord de la feuille.

Le moyen de pressage de la feuille contre la forme supérieure peut être de nature mécanique et il comprend dans ce cas un cadre de pressage présentant des courbures correspondantes à celles souhaitées pour la forme finale de la feuille de verre et donc également des courbures complémentaires de la forme supérieure de bombage. Dans ce cas, la feuille à presser est pressée entre deux outils de bombage, une forme supérieure de bombage et un cadre de pressage.

Ainsi, l'invention concerne également un dispositif de bombage de feuilles de verre comprenant le dispositif de convoyage selon l'invention, comprenant une forme supérieure de bombage, un moyen de pressage d'une feuille pouvant presser la périphérie de la feuille contre la forme supérieure de bombage, la position longitudinale de la feuille au moment de sa prise en charge par le moyen de pressage étant une position d'arrêt imposée par les butées. Notamment, le moyen de pressage peut comprendre un cadre de pressage ayant une forme complémentaire à celle de la forme supérieure de bombage, ledit cadre de pressage pouvant supporter la périphérie de la feuille à presser, la forme supérieure de bombage et le cadre de pressage pouvant se déplacer l'un vers l'autre afin de presser entre eux la feuille à presser.

La forme supérieure de bombage peut être du type cadre ou être une forme pleine. Une forme pleine de bombage entre en contact avec le verre non seulement à sa périphérie mais aussi sur l'ensemble de la surface du verre et notamment dans sa région centrale. Cette forme pleine peut présenter des orifices à sa surface de contact avec le verre, orifices au travers desquels une aspiration ou un soufflage peut être exercé. Une aspiration est exercée notamment lorsque la feuille de verre venant d'être bombée doit être retenue par la forme supérieure de bombage alors que le cadre de pressage est redescendu et n'a plus de contact avec la feuille. Un soufflage peut éventuellement être exercé par les mêmes orifices lorsque l'on souhaite accélérer le détachement de la feuille de la forme supérieure, notamment lorsqu'on veut la poser sur un cadre de refroidissement. La surface de contact avec le verre de la forme supérieure de bombage est généralement convexe. La forme supérieure de bombage peut également être munie d'une jupe pouvant exercer une aspiration autour d'elle. Après le pressage de la feuille, celle-ci est maintenue en contact avec la forme supérieure de bombage grâce à une aspiration exercée au travers de ses orifices alors que le cadre de pressage redescend, puis un cadre de refroidissement est placé sous la feuille encore en contact avec la forme supérieure de bombage, puis l'aspiration est stoppée et la feuille est recueillie par le cadre de refroidissement, puis le cadre de refroidissement entraîne la feuille bombée dans une zone de refroidissement, puis la feuille est refroidie.

La forme supérieure de bombage peut aussi ne pas comprendre d'orifices à sa surface de formage. Dans ce cas, la feuille redescend après pressage, sur le cadre de pressage. Ce cadre de pressage descend en-dessous de la surface de réception de la feuille, notamment en-dessous du niveau des « rouleaux de positionnement » placés sous la forme supérieure de bombage. Ces « rouleaux de positionnement » sont les derniers rouleaux du lit de rouleau à recevoir les feuilles de verre avant le bombage et sont ceux sur lesquels chaque feuille à presser doit être correctement positionnée. Ils sont pour cette raison appelés « rouleaux de positionnement ». La feuille bombée est ainsi replacée sur le lit de rouleau, lequel peut ensuite amener la feuille bombée vers une zone de refroidissement. Dans ce cas, les butées ne reprennent leur place pour arrêter une feuille suivante que lorsque la feuille bombée a été évacuée de la surface de réception.

Notamment, les rouleaux de positionnement peuvent avoir une forme courbée proche voir identique à la forme des feuilles bombées, selon une direction transversale (orthogonale à la direction longitudinale correspondant à la direction générale de déplacement des feuilles). Dans ce cas, lorsque les feuilles arrivent avant bombage sous la forme supérieure de bombage, il est possible qu'elles n'épousent pas complètement les rouleaux de positionnement à ce stade.

Le cadre de pressage comprend une piste de contact pour supporter la feuille de verre. Cette piste a une forme complémentaire à celle de la forme pleine de bombage, cette forme correspondant à celle finalement souhaitée pour la feuille. Si la forme supérieure de bombage est convexe, la piste de contact du cadre de pressage présente des courbures concaves. Lorsque la feuille à presser arrive entre les outils de bombage, la piste de contact du cadre de pressage se trouve sous la surface de réception de la feuille de verre par les rouleaux.

Un lit de rouleaux amène les feuilles de verre les unes derrière les autres jusqu'à une position optimale sous la forme supérieure de bombage. Des rouleaux de positionnement dudit lit, généralement 2 ou 3 ou 4 rouleaux, voire plus, se trouvent sous la forme supérieure de bombage. Ces rouleaux de positionnement ne gênent pas le déplacement vers le haut du cadre de pressage. Généralement, ces rouleaux de positionnement sous la forme supérieure de bombage sont moins longs que les autres rouleaux du lit et, vu de dessus, se trouvent à l'intérieur du contour intérieur du cadre de pressage. De la sorte, le cadre de pressage peut passer au-dessus ou au-dessous de la surface de réception de la feuille de verre formée par ces rouleaux de positionnement. Les rouleaux de positionnement peuvent également être aussi longs que les autres rouleaux sans gêner le déplacement vers le haut du cadre de pressage dès lors que celui-ci est segmenté. Ils peuvent donc dépasser du cadre de bombage vue de dessus. Dans ce cas, le cadre de bombage présente une piste de contact discontinue vis-à-vis de la face inférieure de la feuille de verre, la piste de contact du cadre de bombage étant alors constituée pour partie de segments passant entre les rouleaux lors du mouvement vertical du cadre de bombage. Ces segments peuvent être des encoches ménagées dans des côtés du cadre de bombage comme sur le cadre référencé 21 de la figure 3 du WO02/06170. Ainsi, le cadre de bombage peut présenter une piste de contact continue ou discontinue vis-à-vis de la face inférieure du verre. Le cadre de bombage peut même ne supporter que deux côtés de la feuille de verre auquel cas il peut être constitué de deux segments. En général, les segments supportent les côtés les plus longs de la feuille de verre. Le cadre de bombage vient de préférence en contact de tous les côtés de la feuille de verre, tout en offrant un contact éventuellement discontinu.

Le lit de rouleaux est moteur car il fait avancer les feuilles de verre jusqu'en leur position optimale sous la forme supérieure de bombage. Les rouleaux de positionnement sont aussi moteurs. Les rouleaux de positionnement ralentissent et s'arrêtent après contact de la feuille de verre par sa tranche contre les butées prévues. La feuille de verre dite feuille à presser trouve sa position optimale sous la forme supérieure de bombage en venant en butée par sa tranche contre au moins deux butées de position.

Après le pressage donnant sa forme finale à la feuille, il convient de refroidir la feuille pour qu'elle conserve sa forme bombée. Généralement, après pressage, la forme supérieure de bombage maintient la feuille contre elle grâce à une aspiration exercée au travers d'orifice à sa surface de contact avec la feuille, permettant au cadre de pressage de redescendre sans entraîner la feuille avec lui. Un cadre de refroidissement est alors amené sous la forme supérieure de bombage, généralement par un déplacement comprenant au moins une composante horizontale. L'aspiration exercée par la forme supérieure de bombage est ensuite arrêtée et la feuille de verre bombée est alors recueillie par le cadre de refroidissement. Un léger soufflage peut même être exercé par la forme supérieure de bombage pour aider au détachement de la feuille de verre de la forme supérieure de bombage. Le cadre de refroidissement a avantageusement la forme finale souhaitée pour la feuille. Le cadre de refroidissement se déplace alors pour emmener la feuille de verre bombée en zone de refroidissement. Le cas échéant, un durcissement ou une trempe thermique peut être appliqué à la feuille par soufflage d'air de refroidissement.

Tous les outils venant en contact avec le verre (cadre de pressage, forme supérieure de bombage, cadre de refroidissement) sont généralement recouverts d'un textile réfractaire adoucissant leur contact avec le verre et limitant les risques de marquage. Ces outils de bombage peuvent se trouver dans un four (c'est-à-dire une enceinte chauffante), maintenant le verre à sa température de déformation, généralement entre 550 et 1000°C. Pour le cas du formage d'une feuille de verre sodocalcique, la température est généralement comprise dans le domaine allant de 550 à 700°C. Pour le cas du formage d'une feuille de verre précurseur de vitrocéramique, la température est généralement comprise dans le domaine allant de 700 à 1000°C. Cependant, généralement, ces outils de bombage ne se trouvent pas dans un four, mais juste derrière un four ayant chauffé les feuilles à leur température de bombage thermique. Dans ce cas, le lit de rouleaux de convoyage traverse un four pour porter les feuilles à leur température de déformation, sort du four et amène les feuilles de verre sous la forme supérieure de bombage située hors du four, juste derrière la sortie du four.

L'invention concerne également un procédé de convoyage de feuilles de verre par le dispositif selon l'invention comprenant le convoyage en direction longitudinale des feuilles de verre les unes derrière les autres par un moyen de convoyage, puis, le contact de la tranche d'une feuille de verre avec les butées, la feuille étant entraînée par le moyen de convoyage jusqu'au contact avec les deux butées, son orientation étant automatiquement corrigée par l'action physique des butées sur la feuille, puis l'établissement de la durée entre les contacts de la feuille de verre avec chaque butée par le système d'acquisition. Notamment, après établissement de ladite durée, l'orientation de feuilles de verre suivantes, ces dernières étant en amont de la feuille déjà venue au contact des butées, est modifiée pour raccourcir la durée entre les contacts desdites feuilles de verre suivantes avec chaque butée comparé à la durée entre les contacts avec chaque butée de la feuille déjà venue au contact des butées.

L'invention concerne également un procédé de bombage de feuilles de verre en défilement les unes derrière les autres par le dispositif de bombage selon l'invention, comprenant la prise en charge des feuilles de verre les unes derrière les autres par le moyen de convoyage, notamment un lit de rouleaux, puis, pour chaque feuille de verre l'une après l'autre, le contact de la tranche de la feuille de verre à presser avec les butées, puis le bombage de la feuille de verre à presser par pressage contre la forme supérieure de bombage, notamment par un cadre de bombage. Pour la prise en charge des feuilles de verre par le moyen de convoyage, notamment un lit de rouleaux, celles-ci sont généralement posées manuellement ou par un robot au début du moyen de convoyage.

Le dispositif de détection de la position de la feuille de verre à presser comprend deux butées, les signaux électriques relatifs à chaque butée et délivrés par le dispositif de détection étant couplés à un système d'acquisition permettant d'établir la durée entre les contacts de la feuille de verre avec chaque butée. Après établissement de la durée entre les contacts d'une feuille de verre venue en contact avec chaque butée, l'orientation de feuilles de verre en amont de ladite feuille peut être modifiée pour raccourcir ladite durée. Notamment, l'orientation des feuilles de verre au chargement sur le moyen de convoyage, notamment un lit de rouleau, peut être modifiée si nécessaire pour raccourcir ladite durée. Notamment, le moyen de convoyage fait traverser un four aux feuilles de verre pour les porter à leur température de déformation plastique en vue de leur bombage, l'orientation de feuilles de verre en amont de la feuille venue en contact avec chaque butée, étant modifiée en tenant compte de l'information délivrée par le système d'acquisition de préférence en amont du four.

L'invention répond au resserrement des tolérances par les constructeurs automobiles ainsi que la demande croissante de réduction des pertes et des coûts de production. L'invention constitue un système de fiabilisation du positionnement du verre sous une forme de pressage. Il permet de diminuer les rebuts et est particulièrement adapté à une production à des cadences élevées. Le dispositif selon l'invention peut être installé sur des outillages de formage standard en atmosphère libre et permet de contrôler et corriger de façon précise la position du verre par rapport à l'outillage de formage, juste avant le démarrage du cycle de pressage. La détection est précise, fiable et disponible en temps réel, elle permet de détecter les dérives d'orientation des feuilles et permet ainsi une réaction corrective plus rapide sur le procédé. Dans le cadre d'un procédé de bombage, l'invention permet d'obtenir une meilleure conformité géométrique des vitrages et une stabilité accrue tout au long de la production. L'invention procure une aide à la décision qui permet, via la correction rapide de la position du verre sous l'outil de bombage, de réduire significativement le nombre de vitrages cassés ou rejetés pour défaut en géométrie. Le dispositif de détection est couplé à un système d'acquisition des mesures en temps réel, ce qui permet une détection aisée des dérives par le conducteur d'installation ou une analyse de la campagne a postériori. Le dispositif est particulièrement adapté à l'identification des dérives lentes de positionnement du verre sous un outillage de pressage et permet une réaction rapide sur le positionnement du verre en entrée de four. En effet, le dispositif permet d'identifier les dérives de positionnement avant qu'elles ne se traduisent par des rebuts de galbes. De plus, équipé d'une interface adéquate, il peut indiquer dans quel sens le conducteur doit corriger la position du verre à l'enfournement.

Le dispositif de convoyage et de détection selon l'invention peut comprendre un système de correction automatique de l'orientation des feuilles (dites feuilles de verre suivantes) en amont d'une feuille venue au contact des butées, en fonction de la durée mesurée par le système d'acquisition entre les contacts de ladite feuille (celle déjà venue au contact des butées) avec chaque butée. La correction automatique produit un raccourcissement de la durée entre les contacts des feuilles de verre suivantes avec chaque butée comparé à la durée entre les contacts avec chaque butée de la feuille déjà venue au contact des butées. Cette correction d'orientation réalisée pour des feuilles en amont de celle en butée peut être effectuée par des éléments du type butée ou barre venant au contact du verre, notamment sa tranche, pour lui redonner une bonne orientation. La correction de l'orientation des feuilles peut aussi être réalisée dès la prise en charge des feuilles par le moyen de convoyage, par exemple dès la pose des feuilles (manuelle ou par un robot) sur un lit de rouleau. Dans ce cas c'est la pose des feuilles sur le moyen de convoyage qui est modifiée pour donner directement aux feuilles leur bonne orientation, sans qu'il ne soit nécessaire d'utiliser des éléments venant au contact des feuilles de verre après leur prise en charge par le moyen de convoyage. De la sorte, la correction de dérive de l'orientation agit pour un ensemble de feuilles jusqu'à la détection d'une nouvelle dérive. Ce système est particulièrement avantageux par rapport à un système déterminant l'orientation de chaque feuille pour corriger son orientation en aval de la détection, car alors cela nécessite d'agir sur chaque feuille. De plus, la détection de l'orientation des feuilles selon l'invention est réalisée au plus près de l'endroit où celle-ci doit être optimale. Selon l'invention, un dispositif de commande peut ainsi être relié au système d'acquisition et commander automatiquement la correction de l'orientation des feuilles en agissant sur les éléments venant au contact des feuilles ou sur le robot posant les feuilles sur le moyen de convoyage, à partir de l'information donnée par le système d'acquisition sur la durée entre les contacts d'une feuille avec les butées. Ainsi, la correction automatique de l'orientation des feuilles est réalisable au commencement de la prise en charge des feuilles par le moyen de convoyage.

Pour le cas où le dispositif de convoyage selon l'invention comprend un four pour chauffer les feuilles à leur température de déformation plastique, notamment en vue de leur bombage, la correction (manuelle ou automatique) de l'orientation des feuilles par des éléments venant au contact des feuilles est avantageusement réalisée avant leur entrée dans le four. En effet, le verre est alors insensible au marquage et de plus on peut utiliser un système mécanique fonctionnant à la température ambiante.

Le contact entre une butée et la tranche de la feuille convoyée occasionne un déplacement de la butée, ledit déplacement étant transformé en un signal électrique. Le signal électrique délivré par le dispositif, en conséquence du contact de la butée avec la tranche d'une feuille de verre, peut venir d'une détection dans le dispositif du déplacement de la butée ou d'une pièce reliée à elle directement ou indirectement, ladite détection pouvant être du type « détection sans contact », ou bien provenir d'un véritable contact électrique. Notamment, un micro-mouvement d'une pièce du dispositif peut être transmis de façon pneumatique. Notamment, une butée venant directement au contact de la tranche de la feuille de verre peut se déplacer légèrement sous l'effet de la poussée de la feuille de verre et provoquer la détection. Ce déplacement au niveau de la feuille de verre (c'est-à-dire à l'horizontale de la feuille), en direction longitudinale de déplacement général des feuilles, peut être compris par exemple dans le domaine allant de 0,2 à 1,5 mm.

Généralement, la vitesse de convoyage est comprise entre 800 et 2000 mm/s. Il s'agit là de la vitesse maximale des feuilles en direction longitudinale, étant entendu qu'à l'approche des butées, la vitesse d'une feuille est fortement diminuée suite au ralentissement des rouleaux. Le contact d'une feuille de verre avec deux butées est considéré comme étant simultané si le délai entre les contacts de la feuille avec les deux butées est inférieur à 30 ms, et de préférence inférieur à 20 ms. Ce délai correspond à une distance à parcourir par le côté de la feuille arrivant en second au contact avec une butée, inférieure à 0,2 mm et de préférence inférieure à 0,1 mm en direction longitudinale. Dans le cas où l'on considère les contacts avec les deux butées comme étant simultanés, on estime inutile de procéder à une correction de l'orientation des feuilles en début de convoyage.

Le dispositif selon l'invention est conçu pour fonctionner dans une ambiance agressive (projection de verre chaud, mouvement répétitifs, air de trempe) et chaude en raison de la proximité d'un four et des forts courants d'air chaud et du contact avec la tranche des feuilles chaudes. Une butée entre en contact avec le verre par l'intermédiaire d'une pièce de contact en un matériau adapté pouvant être un polymère à haute tenue thermique, le cas échéant chargé d'une matière minérale. On rend cette pièce de contact démontable pour pouvoir la remplacer en cas d'usure. Ce système s'adapte donc bien aux évolutions des matériaux de contact. Le fonctionnement de la détection pourrait également être réalisé sans contact réel avec le verre grâce à l'utilisation d'un système optique notamment du type laser. La détection de la position et de l'orientation du verre par les butées peut être utilisée pour asservir directement le réglage de l'orientation des feuilles de verre à l'entrée du four en fonction des positions de verre détectées.

La présente invention concerne tout type de verre, clair ou teinté, revêtu d'au moins une couche, émaillé ou non émaillé. La feuille traitée selon l'invention peut servir à toute application dans le domaine automobile ou agricole (voiture, camions, bus, etc) pour faire office de pare-brise, lunette arrière, vitre latérale, custode, toit, bayflush ou autre. La feuille traitée selon l'invention peut également servir dans tout domaine hors automobile tel que le bâtiment, le solaire, les applications de spécialité, l'aéronautique, les plaques de cuisson en vitrocéramique, etc). La feuille traitée selon l'invention peut avoir toute épaisseur, généralement comprise dans le domaine allant de 1 à 100 mm, et avoir toute dimension de faces principales. Après traitement selon l'invention, la feuille peut être trempée. Après traitement selon l'invention, la feuille peut être incorporée dans un vitrage feuilleté. Après traitement selon l'invention, la feuille peut être céramisée par un traitement thermique ultérieur si elle est du type précurseur de vitrocéramique.

Les feuilles peuvent notamment intégrer des vitrages feuilletés. Les feuilles peuvent subir lors du refroidissement suivant leur bombage, un traitement de trempe.

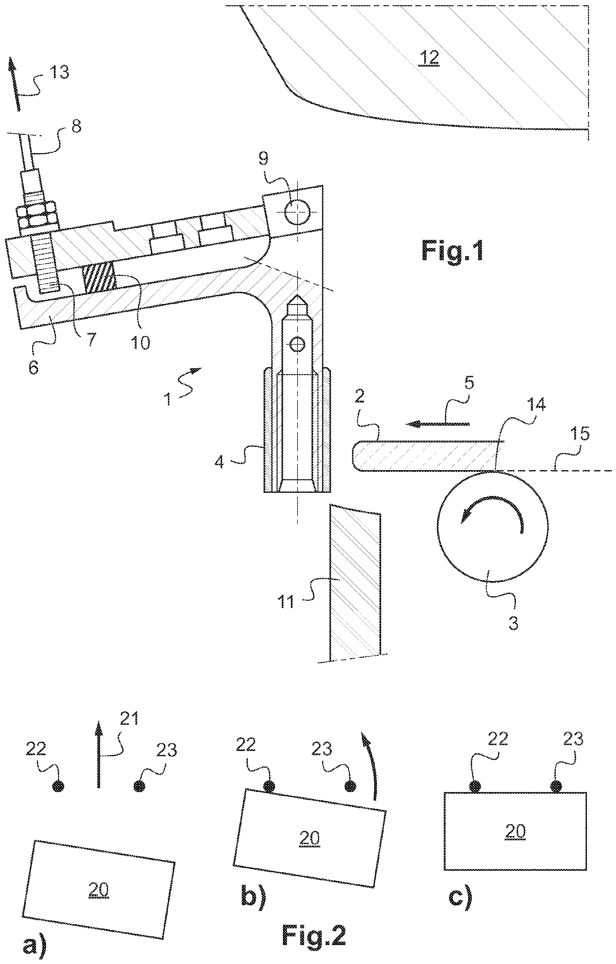

La figure 1 représente une butée 1 utilisée dans le cadre de l'invention vue de côté. Une feuille de verre 2 est convoyée par un lit de rouleau dont un seul rouleau 3 est représenté. Les points les plus haut 14 des rouleaux forment la surface de convoyage 15. La feuille de verre est à l'approche vers la butée constituant sa limite de déplacement en direction longitudinale 5. Cette butée comprend une bague cylindrique 4 en un matériau approprié pour le contact avec le verre chaud. Le contact entre la butée et la tranche de la feuille provoque un léger déplacement de la bague en direction longitudinale. La butée bascule alors autour du pivot 9 et provoque un rapprochement entre la pièce métallique 6 et le capteur sans contact 7. Le rapprochement est détecté par le capteur sans contact 7 ce qui se traduit par la délivrance d'un signal via le câble 8. La pièce 10 est un ressort repoussant les pièces 6 et 7 l'une de l'autre lorsqu'aucune feuille n'appuie contre la butée. La feuille 2 sera en position optimale quand elle sera en contact avec la butée 1. Elle se trouve entre deux outils de bombage, le cadre de pressage 11 et la forme supérieure de bombage 12. Lorsque la feuille 2 est en position optimale et que les rouleaux 3 sont arrêtés, la butée 1 est évacuée selon la direction 13, ladite direction comprenant une composante verticale et une composante horizontale de façon à ce que le matériau 4 ne frotte pas le verre lors de l'évacuation. Après évacuation de la butée, le cadre de pressage 11 monte pour prendre en charge la feuille 2 et la presser contre la forme supérieure convexe 12.
La figure 2 montre, vue de dessus, comment deux butées 22 et 23 agissent vis-à-vis d'une feuille de verre 20 convoyée en direction longitudinale 21 mais mal positionnées sur le lit de rouleau (non représenté) avant leur passage dans le four. Le plan de la figure est parallèle à la surface de convoyage des feuilles. La mauvaise orientation dans le plan de convoyage a été exagérée pour faciliter la compréhension. En a), la feuille mal orientée n'est pas encore arrivée entre les outils de bombage (non représentés). En b), la feuille a touché la butée 22 mais pas encore la butée 23. Seule la butée 22 a délivré un signal électrique à ce stade. La feuille pivote alors autour de la butée 22 sous l'action motrice des rouleaux de positionnement sous elle. Seule la butée 22 a délivré un signal électrique à ce stade. En c) la feuille touche aussi la butée 23 trouvant ainsi sa position optimale entre les outils de bombage. Après arrêt des rouleaux de positionnement, le cycle de bombage peut commencer.
La figure 3 montre un dispositif de convoyage et de bombage selon l'invention vu de dessus, la forme supérieure de bombage n'étant pas représentée. Les feuilles de verre sont convoyées par le lit de rouleaux 31 en direction longitudinale 30. Les feuilles planes sont tout d'abord chauffées jusqu'à leur température de bombage dans un four 32 située en amont de la cellule de bombage proprement dite. La feuille 33 est représentée en train de sortir du four pour aller entre les outils de bombage. Une cellule de détection 34, notamment optique ou autre, placée sous la surface de convoyage des feuilles détecte le passage des feuilles entre deux rouleaux avant d'arriver entre les outils de bombage. Le signal donné par cette cellule de détection est exploité pour ralentir et arrêter les quatre rouleaux 35 placés entre les outils de bombage et dits « rouleaux de positionnement ». Ces rouleaux de positionnement sont circonscrits, vue de dessus, par le cadre de pressage 36, lequel est mobile verticalement et sous la surface de réception des feuilles par les rouleaux de positionnement 35 pour laisser passer la prochaine feuille à presser. L'action d'entraînement des rouleaux de positionnement est réglée pour que la feuille à presser touche à coup sûr les deux butées selon l'invention 37 et 38. Quand la feuille est en contact avec ces deux butées, les rouleaux de positionnement 35 s'arrêtent, puis les butées 37 et 38 sont escamotées, puis le cadre de pressage 36 monte pour prendre en charge la feuille à presser et presser celle-ci contre la forme supérieure de bombage (non-représentée). Le bombage étant réalisé, le cadre de pressage redescend avec la feuille. Le cadre de pressage descend sous la surface de réception des feuilles formée par le haut des rouleaux, ces derniers recevant alors la feuille bombée. Les rouleaux entraînent ensuite la feuille bombée 51 vers une zone de refroidissement et de déchargement. Le cas échéant les rouleaux 39 peuvent avoir une courbure transversale correspondant à la celle des feuilles bombées. Après évacuation en direction longitudinale de la feuille 51, les butées 37 et 38 reprennent leur position pour jouer vis-à-vis de la feuille 33 le même rôle qu'elles ont joué pour la feuille 51.

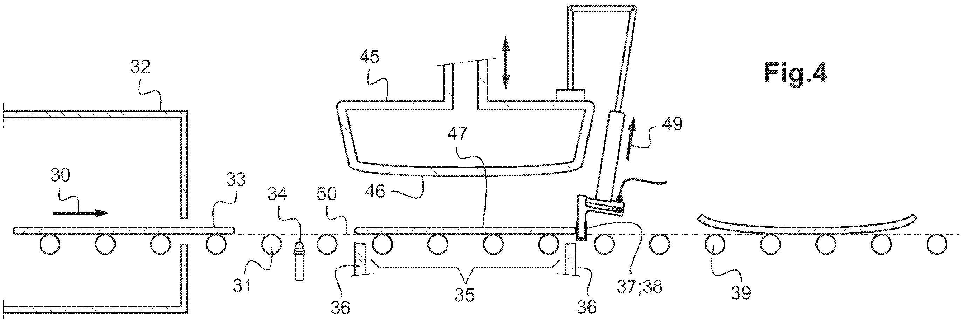

La figure 4 représente le même dispositif et le même procédé que celui de la figure 3 mais vue de côté. On a gardé les mêmes signes de référence pour désigner les mêmes éléments. La surface de convoyage est formée par le haut des rouleaux et est représentée par une ligne pointillée horizontale 50. Les butées 37 et 38 sont représentées en position pour stopper le convoyage de la feuille à presser 47 dans la direction de convoyage 30. Le cadre de pressage 36 est représenté encore sous le niveau de la surface de convoyage 50 et de réception (sous la forme supérieure de bombage 45 qui peut descendre ou monter) de la feuille à presser par les rouleaux. Quand la feuille à presser 47 est en bonne position, les butées 37 et 38 sont escamotées en biais vers le haut selon un mouvement en direction 49 comprenant une composante verticale et une composante horizontale en direction longitudinale. Une fois les butées escamotées, le cadre de pressage 36 monte pour prendre en charge la feuille à presser et presser celle-ci contre la forme supérieure de bombage qui est descendue à la rencontre de la feuille de verre. Après bombage, la feuille est redescendue par le cadre 36 sur le lit de rouleaux, lequel est remis en route, et la feuille bombée est ainsi évacuée vers la droite sur la figure.

## Revendications

1. Dispositif de convoyage de feuilles de verres défilant les unes derrière les autres comprenant un moyen de convoyage (31) des feuilles de verre en direction longitudinale (30) et un dispositif de détection de l'orientation d'une feuille de verre comprenant deux butées (37, 38) pour venir toutes deux en contact avec la tranche de la feuille de verre, la feuille étant entraînée par le moyen de convoyage jusqu'au contact avec les deux butées afin que son orientation soit automatiquement corrigée par l'action physique des butées sur la feuille, ledit dispositif de détection délivrant un signal électrique relativement à chaque contact avec chaque butée, lesdits signaux électriques étant couplés à un système d'acquisition permettant d'établir la durée entre les contacts de la feuille de verre avec chaque butée.

2. Dispositif selon la revendication précédente, **caractérisé en ce que** le contact entre une butée et la tranche de la feuille convoyée occasionne un déplacement de la butée, ledit déplacement étant transformé en un signal électrique.

3. Dispositif selon la revendication précédente, **caractérisé en ce que** le déplacement de la butée au niveau de la feuille de verre est compris dans le domaine allant de 0,2 à 1,5 mm.

4. Dispositif selon l'une des revendications précédentes, **caractérisé en ce que** les butées (1, 37, 38) sont escamotables après leur contact avec la tranche de la feuille de verre (2).

5. Dispositif selon l'une des revendications précédentes, **caractérisé en ce que** les butées constituent une limite au déplacement longitudinal de la feuille de verre.

6. Dispositif selon l'une des revendications précédentes, **caractérisé en ce qu'**il comprend un détecteur d'arrivée de feuille (34), notamment un télémètre optique, déclenchant le ralentissement du moyen de convoyage avant le contact d'une feuille avec une des butées.

7. Dispositif selon l'une des revendications précédentes, **caractérisé en ce que** le moyen de convoyage est un lit de rouleaux (31).

8. Dispositif selon l'une des revendications précédente, **caractérisé en ce qu'**il comprend un système de correction automatique de l'orientation des feuilles, dites feuilles de verre suivantes, en amont d'une feuille venue au contact des butées, en fonction de la durée mesurée par le système d'acquisition entre les contacts avec chaque butée de la feuille venue au contact des butées.

9. Dispositif selon la revendication précédente, **caractérisé en ce que** la correction automatique produit un raccourcissement de la durée entre les contacts des feuilles de verre suivantes avec chaque butée (37, 38) comparé à la durée entre les contacts avec chaque butée de la feuille venue au contact des butées.

10. Dispositif selon l'une des deux revendications précédentes, **caractérisé en ce qu'**il comprend un four (32) pour chauffer les feuilles (33) à leur température de déformation plastique, la correction automatique de l'orientation des feuilles étant réalisable par des éléments venant au contact des feuilles avant leur entrée dans le four.

11. Dispositif selon l'une des trois revendications précédentes, **caractérisé en ce que** la correction automatique de l'orientation des feuilles est réalisable au commencement de la prise en charge des feuilles par le moyen de convoyage.

12. Dispositif de bombage de feuilles de verre comprenant le dispositif de l'une des revendications précédentes, **caractérisé en ce qu'**il comprend une forme supérieure de bombage (46), un moyen de pressage (36) d'une feuille pouvant presser sa périphérie contre la forme supérieure de bombage, la position longitudinale de la feuille au moment de sa prise en charge par le moyen de pressage étant une position d'arrêt imposée par les butées (37, 38).

13. Dispositif de bombage selon la revendication précédente, **caractérisé en ce que** le moyen de pressage comprend un cadre de pressage (36).

14. Procédé de convoyage de feuilles de verre par le dispositif de l'une des revendications précédentes comprenant le convoyage en direction longitudinale des feuilles de verre les unes derrière les autres par le moyen de convoyage, puis, le contact de la tranche d'une feuille de verre avec les butées, la feuille étant entraînée par le moyen de convoyage jusqu'au contact avec les deux butées, son orientation étant automatiquement corrigée par l'action physique des butées sur la feuille, puis l'établissement de la durée entre les contacts de la feuille de verre avec chaque butée par le système d'acquisition.

15. Procédé selon la revendication précédente, **caractérisé en ce que** après établissement de ladite durée, l'orientation de feuilles de verre, dites feuilles de verre suivantes, en amont de la feuille venue au contact des butées, est modifiée pour raccourcir la durée entre les contacts des feuilles de verre suivantes avec chaque butée comparé à la durée entre les contacts avec chaque butée de la feuille venue au contact des butées.

16. Procédé selon la revendication précédente, **caractérisé en ce que** la modification de l'orientation des feuilles de verre suivantes est réalisée à leur chargement sur le moyen de convoyage, notamment un lit de rouleaux.

17. Procédé selon l'une des revendications précédentes de procédé **caractérisé en ce qu'**un détecteur (34) d'arrivée de feuille, notamment un télémètre optique, déclenche le ralentissement du moyen de convoyage avant le contact d'une feuille avec une des butées.

18. Procédé selon l'une des revendications précédentes de procédé, **caractérisé en ce que** les butées constituent une limite au déplacement longitudinal de la feuille de verre.

19. Procédé de bombage de feuilles de verre comprenant le convoyage de feuilles de verre selon le procédé de l'une des revendications précédentes de procédé, comprenant la prise en charge des feuilles de verre les unes derrière les autres par le moyen de convoyage, puis, pour chaque feuille de verre l'une après l'autre, le contact de leur tranche avec les butées, puis leur bombage par pressage contre une forme supérieure de bombage.

20. Procédé selon la revendication précédente, **caractérisé en ce qu'**il comprend l'escamotage des butées après le début de leur contact avec la tranche de la feuille de verre à presser et avant le bombage de celle-ci par pressage.

21. Procédé selon la revendication précédente, **caractérisé en ce qu'**après bombage d'une feuille, les butées reprennent leur position pour venir au contact de la feuille suivante.

22. Procédé selon l'une des trois revendications précédentes, **caractérisé en ce que** le moyen de convoyage fait traverser un four aux feuilles de verre pour les porter à leur température de déformation plastique avant bombage, l'orientation de feuilles de verre en amont de la feuille venue en contact avec chaque butée, étant modifiée en amont du four.

23. Procédé selon la revendication précédente, **caractérisé en ce que** la modification de l'orientation des feuilles de verre conduit au raccourcissement de la durée entre leur contact avec chaque butée.

24. Procédé selon l'une des revendications précédentes de procédé de bombage, **caractérisé en ce que** le bombage par pressage est exercé par un moyen de pressage comprenant un cadre de pressage.

## Patentansprüche

1. Vorrichtung zum Fördern von Glasscheiben, die hintereinander ablaufen, die ein Fördermittel (31) der Glasscheiben in Längsrichtung (30) und eine Vorrichtung zum Erfassen der Ausrichtung einer Glasscheibe umfasst, die zwei Anschläge (37, 38) umfasst, die beide mit der Kante der Glasscheibe in Kontakt kommen, wobei die Scheibe durch das Fördermittel bis zum Kontakt mit den beiden Anschlägen angetrieben wird, damit ihre Ausrichtung automatisch durch die physische Wirkung der Anschläge auf die Scheibe korrigiert wird, wobei die Erfassungsvorrichtung ein elektrisches Signal in Bezug auf jeden Kontakt mit jedem Anschlag liefert, wobei die elektrischen Signale an ein Aufzeichnungssystem gekoppelt sind, das es erlaubt, die Dauer zwischen den Kontakten der Glasscheibe mit jedem Anschlag zu ermitteln.

2. Vorrichtung nach dem vorstehenden Anspruch, **dadurch gekennzeichnet, dass** der Kontakt zwischen einem Anschlag und der Kante der geförderten Scheibe eine Verlagerung des Anschlags bewirkt, wobei die Verlagerung in ein elektrisches Signal umgewandelt wird.

3. Vorrichtung nach dem vorstehenden Anspruch, **dadurch gekennzeichnet, dass** die Verlagerung des Anschlags im Bereich der Glasscheibe von 0,2 bis 1,5 mm reicht.

4. Vorrichtung nach einem der vorstehenden Ansprüche, **dadurch gekennzeichnet, dass** die Anschläge (1, 37, 38) nach ihrem Kontakt mit der Kante der Glasscheibe (2) einfahrbar sind.

5. Vorrichtung nach einem der vorstehenden Ansprüche, **dadurch gekennzeichnet, dass** die Anschläge eine Grenze der Längsverlagerung der Glasscheibe bilden.

6. Vorrichtung nach einem der vorstehenden Ansprüche, **dadurch gekennzeichnet, dass** sie einen Scheibenankunftsdetektor (34), insbesondere einen optischen Entfernungsmesser, umfasst, der die Verlangsamung des Fördermittels vordem Kontakt einer Scheibe mit einem der Anschläge auslöst.

7. Vorrichtung nach einem der vorstehenden Ansprüche, **dadurch gekennzeichnet, dass** das Fördermittel ein Walzenbett (31) ist.

8. Vorrichtung nach einem der vorstehenden Ansprüche, **dadurch gekennzeichnet, dass** sie ein automatisches Korrektursystem der Ausrichtung der Scheiben, folgende Glasscheiben genannt, stromaufwärts einer Scheibe, die mit den Anschlägen in Kontakt gekommen ist, in Abhängigkeit von der Dauer, die von dem Aufzeichnungssystem zwischen den Kontakten mit jedem Anschlag der Scheibe, die mit den Anschlägen in Kontakt gekommen ist, gemessen wird, umfasst.

9. Vorrichtung nach dem vorstehenden Anspruch, **dadurch gekennzeichnet, dass** die automatische Korrektur eine Verkürzung der Dauer zwischen den Kontakten der folgenden Glasscheiben mit jedem Anschlag (37, 38) im Vergleich zu der Dauer zwischen den Kontakten mit jedem Anschlag der Scheibe, die mit den Anschlägen in Kontakt gekommen ist, bewirkt.

10. Vorrichtung nach einem der beiden vorstehenden Ansprüche, **dadurch gekennzeichnet, dass** sie einen Ofen (32) zum Erhitzen der Scheiben (33) auf ihre plastische Verformungstemperatur umfasst, wobei die automatische Korrektur der Ausrichtung der Scheiben durch Elemente durchführbar ist, die vor ihrem Eintritt in den Ofen mit den Scheiben in Kontakt kommen.

11. Vorrichtung nach einem der drei vorstehenden Ansprüche, **dadurch gekennzeichnet, dass** die automatische Korrektur der Ausrichtung der Scheiben zu Beginn der Übernahme der Scheiben durch das Fördermittel durchführbar ist.

12. Vorrichtung zum Biegen von Glasscheiben, die die Vorrichtung nach einem der vorstehenden Ansprüche umfasst, **dadurch gekennzeichnet, dass** sie eine obere Biegeform (46), ein Mittel (36) zum Pressen einer Scheibe, das ihren Umfang gegen die obere Biegeform pressen kann, umfasst, wobei die Längsposition der Scheibe im Augenblick ihrer Übernahme durch das Pressmittel in einer Anhalteposition ist, die von den Anschlägen (37, 38) auferlegt wird.

13. Biegevorrichtung nach dem vorstehenden Anspruch, **dadurch gekennzeichnet, dass** das Pressmittel einen Pressrahmen (36) umfasst.

14. Verfahren zum Fördern von Glasscheiben durch die Vorrichtung nach einem der vorstehenden Ansprüche, das das Fördern in Längsrichtung der Glasscheiben hintereinander durch das Fördermittel, dann den Kontakt der Kante einer Glasscheibe mit den Anschlägen umfasst, wobei die Scheibe von dem Fördermittel bis zum Kontakt mit den beiden Anschlägen angetrieben wird, wobei ihre Ausrichtung automatisch durch die physische Wirkung der Anschläge auf die Scheibe korrigiert wird, gefolgt vom Ermitteln der Dauer zwischen den Kontakten der Glasscheibe mit jedem Anschlag durch das Aufzeichnungssystem.

15. Verfahren nach dem vorstehenden Anspruch, **dadurch gekennzeichnet, dass** nach der Ermittelung der Dauer die Ausrichtung von Glasscheiben, folgende Glasscheiben genannt, stromaufwärts der Scheibe, die mit den Anschlägen in Kontakt gekommen ist, geändert wird, um die Dauer zwischen den Kontakten der folgenden Glasscheiben mit jedem Anschlag im Vergleich mit der Dauer zwischen den Kontakten mit jedem Anschlag der Scheibe, die mit den Anschlägen in Kontakt gekommen ist, zu verkürzen.

16. Verfahren nach dem vorstehenden Anspruch, **dadurch gekennzeichnet, dass** die Änderung der Ausrichtung der folgenden Glasscheiben bei ihrem Laden auf das Fördermittel, insbesondere ein Walzenbett, durchgeführt wird.

17. Verfahren nach einem der vorstehenden Verfahrensansprüche, **dadurch gekennzeichnet, dass** ein Scheibenankunftsdetektor (34), insbesondere ein optischer Entfernungsmesser, die Verlangsamung des Fördermittels vor dem Kontakt einer Scheibe mit einem der Anschläge auslöst.

18. Verfahren nach einem der vorstehenden Verfahrensansprüche, **dadurch gekennzeichnet, dass** die Anschläge eine Grenze der Längsverlagerung der Glasscheibe bilden.

19. Verfahren zum Biegen von Glasscheiben, das das Fördern von Glasscheiben nach dem Verfahren eines der vorstehenden Verfahrensansprüche umfasst, das das Übernehmen der Glasscheiben hintereinander durch das Fördermittel, dann, für jede Glasscheibe nacheinander, den Kontakt ihrer Kante mit den Anschlägen, dann ihr Biegen durch Pressen gegen eine obere Biegeform umfasst.

20. Verfahren nach dem vorstehenden Anspruch, **dadurch gekennzeichnet, dass** es das Einfahren der Anschläge nach dem Beginn ihres Kontakts mit der Kante der zu pressenden Glasscheibe und vor ihrem Biegen durch Pressen umfasst.

21. Verfahren nach dem vorstehenden Anspruch, **dadurch gekennzeichnet, dass** nach dem Biegen einer Scheibe die Anschläge ihre Position wieder einnehmen, um mit der nächsten Scheibe in Kontakt zu kommen.

22. Verfahren nach einem der drei vorstehenden Ansprüche, **dadurch gekennzeichnet, dass** das Fördermittel die Glasscheiben einen Ofen durchqueren lässt, um sie vordem Biegen auf ihre plastische Verformungstemperatur zu bringen, wobei die Ausrichtung von Glasscheiben stromaufwärts der Scheibe, die mit jedem Anschlag in Kontakt gekommen ist, stromaufwärts des Ofens geändert wird.

23. Verfahren nach dem vorstehenden Anspruch, **dadurch gekennzeichnet, dass** die Änderung der Ausrichtung der Glasscheiben zu einer Verkürzung der Dauer zwischen ihrem Kontakt mit jedem Anschlag führt.

24. Verfahren nach einem der vorstehenden Biegeverfahrensansprüche, **dadurch gekennzeichnet, dass** das Biegen durch Pressen durch ein Pressmittel, das einen Pressrahmen umfasst, durchgeführt wird.

## Claims

1. A conveying device for conveying sheets of glass advancing one behind the other comprising a conveying means (31) for conveying the sheets of glass in a longitudinal direction (30) and a detection device for detecting the orientation of a sheet of glass comprising two stops (37, 38) each to come into contact with the edge face of the sheet of glass, the sheet being driven by the conveying means until it comes into contact with the two stops so that its orientation is automatically corrected by the physical action of the stops on the sheet, said detection device delivering an electrical signal relating to each contact with each stop, said electrical signals being coupled to an acquisition system making it possible to establish the length of time between contacts between the sheet of glass and each stop.

2. The device as claimed in the preceding claim, **characterized in that** contact between a stop and the edge face of the conveyed sheet gives rise to a movement of the stop, said movement being converted into an electrical signal.

3. The device as claimed in the preceding claim, **characterized in that** the movement of the stop at the level of the sheet of glass is comprised in the range from 0.2 to 1.5 mm.

4. The device as claimed in one of the preceding claims, **characterized in that** the stops (1, 37, 38) are retractable after they have come into contact with the edge face of the sheet of glass (2).

5. The device as claimed in one of the preceding claims, **characterized in that** the stops constitute a limit to the longitudinal movement of the sheet of glass.

6. The device as claimed in one of the preceding claims, **characterized in that** it comprises a sheet-arrival detector (34), in particular an optical telemeter, that triggers the slowing of the conveying means before a sheet comes into contact with one of the stops.

7. The device as claimed in one of the preceding claims, **characterized in that** the conveying means is a bed of rollers (31).

8. The device as claimed in one of the preceding claims, **characterized in that** it comprises a correction system for automatically correcting the orientation of the sheets, referred to as the following sheets of glass, upstream of a sheet that has come into contact with the stops, as a function of the length of time, measured by the acquisition system, between contacts between the sheet of glass that has come into contact with the stops, and each of the stops.

9. The device as claimed in the preceding claim, **characterized in that** the automatic correction produces a shortening of the length of time between contacts of the following sheets of glass and each stop (37, 38) compared with the length of time between contacts between the sheet of glass that has come into contact with the stops and each stop.

10. The device as claimed in one of the two preceding claims, **characterized in that** it comprises an oven (32) for heating the sheets (33) to their plastic deformation temperature, the automatic correction of the orientation of the sheets being able to be performed by elements that come into contact with the sheets before they enter the oven.

11. The device as claimed in one of the three preceding claims, **characterized in that** the automatic correction of the orientation of the sheets can be performed when the sheets are first taken over by the conveying means.

12. A bending device for bending sheets of glass comprising the device as claimed in one of the preceding claims, **characterized in that** it comprises an upper bending form (46), a pressing means (36) for pressing a sheet that can press its periphery against the upper bending form, the longitudinal position of the sheet at the moment it is taken over by the pressing means being a stop position imposed by the stops (37, 38).

13. The bending device as claimed in the preceding claim, **characterized in that** the pressing means comprises a pressing frame (36).

14. A method for conveying sheets of glass using the device as claimed in one of the preceding claims comprising the conveying of the sheets of glass in a longitudinal direction one behind the other by the conveying means followed by contact between the edge face of a sheet of glass and the stops, the sheet being driven by the conveying means until it comes into contact with the two stops so that its orientation is automatically corrected by the physical action of the stops on the sheet, followed by the establishing by the acquisition system of the length of time between contacts between the sheet of glass and each stop.

15. The method as claimed in the preceding claim, **characterized in that** after said length of time has been established, the orientation of the sheets of glass referred to as the following sheets of glass, upstream of the sheet of glass that has come into contact with the stops, is modified in order to shorten the length of time between contacts between the following sheets of glass and each stop compared with the length of time between contacts between the sheet of glass that has come into contact with the stops and each stop.

16. The method as claimed in the preceding claim, **characterized in that** the modification of the orientation of the following sheets of glass is performed as they are loaded onto the conveying means, in particular a bed of rollers.

17. The method as claimed in one of the preceding method claims, **characterized in that** a sheet-arrival detector (34), in particular an optical telemeter, triggers the slowing of the conveying means before a sheet of glass comes into contact with one of the stops.

18. The method as claimed in one of the preceding method claims, **characterized in that** the stops constitute a limit to the longitudinal movement of the sheet of glass.

19. A method of bending sheets of glass comprising the conveying of sheets of glass according to the method as claimed in one of the preceding method claims, comprising the taking-over by the conveying means of the sheets of glass one after the other, followed by, for each sheet of glass one after the other, contact between their edge face and the stops, followed by their bending by pressing against an upper bending form.

20. The method as claimed in the preceding claim, **characterized in that** it comprises retraction of the stops after they have begun to come into contact with the edge face of the sheet of glass for pressing and before this sheet is bent by pressing.

21. The method as claimed in the preceding claim, **characterized in that** after a sheet has been bent, the stops return to their position in order to come into contact with the following sheet.

22. The method as claimed in one of the three preceding claims, **characterized in that** the conveying means causes the sheets of glass to pass through an oven in order to raise them to their plastic deformation temperature prior to bending, the orientation of the sheets of glass upstream of the sheet of glass that has come into contact with each stop being modified upstream of the oven.

23. The method as claimed in the preceding claim, **characterized in that** the modification of the orientation of the sheets of glass leads to a shortening of the length of time between contacts between them and each stop.

24. The method as claimed in one of the preceding bending method claims, **characterized in that** the bending by pressing is performed by a pressing means comprising a pressing frame.
